# EUROPÄISCHE PATENTSCHRIFT

(11) **EP 4 077 973 B1**
(45) Veröffentlichungstag und Bekanntmachung des Hinweises auf die Patenterteilung: **07.08.2024**
(21) Anmeldenummer: 20824921.9
(22) Anmeldetag: 10.12.2020
(51) Int. Cl.: F16H 7/18, B23P 19/04, F16H 7/24

(54) **IM VERBRENNUNGSMOTOR VERBLEIBENDER MONTAGETRÄGER FÜR BEWEGLICHE KOMPONENTEN**
MOUNTING SUPPORT, REMAINING IN THE INTERNAL COMBUSTION ENGINE, FOR MOVABLE COMPONENTS
SUPPORT DE MONTAGE, RESTANT DANS UN MOTEUR À COMBUSTION INTERNE, POUR COMPOSANTS MOBILES

(30) Priorität: 16.12.2019 DE 102019219725
(43) Veröffentlichungstag der Anmeldung: 26.10.2022
(73) Patentinhaber: Stellantis Auto SAS, 78300 Poissy (FR)
(72) Erfinder: HEILMEIER, Michael, 65428 Rüsselsheim am Main (DE)
(74) Vertreter: Spitzfaden, Ralf
(86) Internationale Anmeldenummer: PCT/EP2020/085614
(87) Internationale Veröffentlichungsnummer: WO 2021/122332

(56) Entgegenhaltungen:
- DE-A1- 102008 020 744
- DE-A1- 4 025 126
- DE-U1- 29 621 831

## Beschreibung

### Technisches Gebiet

Um insbesondere einen Nockenwellenantrieb an einer schwer zugänglichen Stirnseite einer Brennkraftmaschine zu montieren, wird in DE 40 25 126 A1 ein Montageträger vorgeschlagen, auf dem die einzelnen Getriebeelemente des Nockenwellenantriebes vormontiert werden. Dieser Montageträger wird danach an der Stirnseite der Brennkraftmaschine entsprechend positioniert, so dass die Getriebeelemente am Maschinengehäuse fixiert werden können. Hiernach wird der Montageträger abgezogen. In einer bevorzugten Ausführungsform ist der Montageträger mit federnden Haltern versehen, die die Schäfte der einzelnen Getriebeelemente zumindest teilweise umgreifen.

Aus dem Stand der Technik sind die Dokumente DE 10 2018 109 239 A1, DE 201 206 56 U1, DE 40 25 126 A1, DE 10 2008 020744 A1 und DE 296 21 831 U1 bekannt

### Beschreibung

Entsprechend einer Aufgabe der vorliegenden Offenbarung soll ein Montageträger angegeben werden, der eine vereinfachte Handhabung ermöglicht. Entsprechend einer weiteren Aufgabe soll ein Montageträger angegeben werden, der unter beengten Bauraumverhältnissen angewendet werden kann.

Diese Aufgabe wird mit den Merkmalen der unabhängigen Ansprüche gelöst. Die Unteransprüche bilden vorteilhafte Weiterbildungen der Offenbarung aus. Die Unteransprüche können in technologisch sinnvoller Weise miteinander kombiniert werden. Die Beschreibung, insbesondere im Zusammenhang mit den Figuren, charakterisiert und spezifiziert die Offenbarung zusätzlich.

Vorgesehen ist demgemäß ein Montageträger für bewegliche Komponenten, insbesondere rotierbar lagerbare Komponenten eines Verbrennungsmotors, wobei die Komponenten außerhalb des Verbrennungsmotors zumindest durch Halteabschnitte an dem Montageträger in einer Montageposition gehalten werden, in der die Komponenten korrespondierend zu Komponentenaufnahmen am Verbrennungsmotor ausgerichtet sind, wobei die Komponenten in eine betriebsbereite Position bringbar sind, in der die Komponenten die Halteabschnitte nicht mehr berühren und zumindest relativ zu dem Verbrennungsmotor an den Komponentenaufnahmen translatorisch oder rotatorisch gelagert sind.

Mit der betriebsbereiten Position ist eine Position der Räder gemeint, in der sie im Betrieb des Verbrennungsmotors ihre jeweilige Funktion erfüllen. Die Räder können einen Riemen, Zahnriemen oder eine Kette antreiben. Die Räder können auch von dem Riemen, Zahnriemen oder der Kette angetrieben werden. Bewegliche Komponenten können transversal und rotatorisch gelagerte und bewegbare Komponenten sein. In der betriebsbereiten Position erfüllen die beweglichen Komponenten eine Funktion, beispielsweise durch Übertragung einer Bewegung auf ein anderes Bauteil. Als nicht abschließende Liste kann es sich bei den Komponenten um folgende Bauteile handeln: Nockenwellenantriebsrad, Spannschiene, Zahnriemenantriebsrad an einer Kurbelwelle, Antriebsrad einer Ölpumpe, Antriebsrad eines Kompressors, Antriebsrad einer hydraulischen oder teilhydraulischen Servolenkung, einer Wasserpumpe oder einer Vakuumpumpe.

Erfindungsgemäß ist der Montageträger aus einem flächigen Blech mit einer Stirnseite und einer Rückseite gebildet, wobei die Halteabschnitte aus zur Stirnseite und zur Rückseite umgebogenen Laschen gebildet sind. Dadurch wird eine Montageplatte bereitgestellt, die sehr einfach in einem Tiefziehverfahren hergestellt werden kann.

In einer Ausgestaltung sind einige der Komponenten Räder, an denen ein umlaufender, geschlossener Triebstrang anliegt, wobei die Räder in der Montageposition zwischen den Halteabschnitten und dem Triebstrang gehalten sind.

Bei Riementrieben, Zahnriementrieben, Steuerkettenantrieben und dergleichen kann es mitunter zu Fehlmontagen durch einen Winkelversatz zwischen Antriebsrädern gegenüber den Abtriebsrädern kommen. Dadurch können beispielsweise bei Nockenwellenantrieben die Steuerzeiten des Verbrennungsmotors falsch eingestellt sein. Dies kann weitestgehend ausgeschlossen werden, wenn der die Einheit am Verbrennungsmotor montierende Monteur die gesamte Einheit von Antriebsrad, Triebstrang und Abtriebsrädern sowie den umlaufenden Zahnriemen oder die umlaufende Kette in Augenschein nehmen kann, um eine richtige Winkellage kontrollieren zu können.

In einer weiteren Ausgestaltung ist der Triebstrang eine Steuerkette eines Nockenwellenantriebs, wobei die Räder eine Außenverzahnung aufweisen, welche mit der Steuerkette in Eingriff bringbar sind, wobei die Steuerkette durch eine Spannschiene in Umfangsrichtung auf einer Zugspannung gehalten werden, so dass die Räder in einer radialen Richtung einwärts gegen die Halteabschnitte gedrückt werden.

Es wird somit eine Fixierung der beweglichen Komponenten durch spätere funktionelle Bauteile realisiert, nämlich durch den Triebstrang, also einen Zahnriemen, einen Flachriemen, einen Poly-V Riemen oder eine Steuerkette.

Aus einem Blech können ohne Hinterschnitte Laschen angeformt werden, welche die Komponenten vorder- und rückseitig umgreifen und so halten können.

In einer Ausgestaltung sind die Laschen versetzt zueinander angeordnet und sie definieren eine Innenkontur, welche an eine Außenkontur der Räder angepasst ist, so dass die Räder gegen ein Kippen zu der Stirnseite oder Rückseite gesichert sind.

Beispielsweise können für jedes Rad drei Laschen an dem Montageträger angeordnet sein, die einen Halteabschnitt ausbilden. Eine Lasche kann einer Stirnseite des Montageträgers zugewandt sein und eine Lasche einer Rückseite.

Vorgesehen ist ferner ein Verfahren zum Montieren von gegenüber einem Verbrennungsmotor beweglich angeordneten Komponenten mit den Schritten:
a) Bereitstellen eines Montageträgers mit daran angeordneten Halteabschnitten, welche die Komponenten in einer Montageposition halten, wobei die Komponenten in der Montageposition gegenüber jeweils korrespondierenden Komponentenaufnahmen ausgerichtet sind, wobei der Montageträger aus einem flächigen Blech mit einer Stirnseite und einer Rückseite gebildet ist und wobei die Halteabschnitte aus zur Stirnseite und zur Rückseite umgebogenen Laschen gebildet sind,
b) Einführen der Montageplatte in eine entsprechende Aufnahme am Verbrennungsmotor,
c) Fixieren der Komponenten an den Aufnahmeabschnitten, wobei während des Fixierens die Komponenten zumindest so weit von den Laschen entfernt werden, dass sie translatorisch oder rotatorisch beweglich sind, wobei der Montageträger im Verbrennungsmotor verbleibt.

Wie bereits erwähnt, kann es sich bei den Komponenten um Räder handeln, an denen ein umlaufender geschlossener Triebstrang anliegt, wobei das Verfahren den folgenden Schritt aufweisen kann, welcher vor den oben genannten Schritten a) bis c) erfolgt: Vorspannen des Triebstrangs in Umfangsrichtung, so dass die Räder gegen ein Verlieren nach Außen gehalten werden.

Dadurch, dass der Montageträger am Motorblock verbleibt, muss kein konstruktiver Freiraum zur Entnahme des Montageträgers bereitgestellt werden. Der Freiraum muss nur so groß sein, dass er den Montageträger mit den daran befindlichen Komponenten in sich aufnehmen kann. Der Verbrennungsmotor kann dadurch insgesamt kompakter ausgeführt werden. Es versteht sich, dass dadurch auch eine Gewichtsersparnis erzielt wird.

### Kurzbeschreibung der Figuren

Die hierin beschriebenen Zeichnungen dienen nur zu Veranschaulichungszwecken und sollen den Umfang der vorliegenden Offenbarung in keiner Weise einschränken. Es zeigen:
Fig. 1: eine Ansicht eines flächigen Montageträgers mit daran angeordneten Rädern und einem umlaufenden Triebstrang;
Fig. 2: einen Verbrennungsmotor mit einer Aufnahme für einen Montageträger und zwei Nockenwellen;
Fig. 3: eine perspektivische Darstellung eines Nockenwellentriebs mit einem eingeführten Nockenwellenantrieb; und
Fig. 4: schematisch vier Schritte eines Verfahrens zur Montage eines Nockenwellenantriebs

Die folgende Beschreibung ist dem Wesen nach lediglich veranschaulichend. Der Klarheit halber sind in den Zeichnungen zur Bezeichnung ähnlicher Elemente dieselben Bezugszeichen verwendet. In der Beschreibung der vorliegenden Offenbarung ist zu verstehen, dass Orientierungs- oder Positionsbeziehungen, die durch die Begriffe "zentral", "längs", "quer", "Länge", "Breite", "Dicke", "oben", "unten", "vorne", "hinten", "links", "rechts", "vertikal", "horizontal", "oben", "unten", "innen", "außen", "rechts", "gegen den Uhrzeigersinn" bezeichnet werden. Orientierungs- oder Positionsbezeichnungen dienen lediglich der Erleichterung und Vereinfachung der Beschreibung der vorliegenden Offenbarung, anstatt darauf hinzuweisen oder hinzuweisen, dass die erwähnten Vorrichtungen oder Elemente spezifische Orientierungen aufweisen und in bestimmten Orientierungen konstruiert und betrieben werden sollten, und können daher nicht als Einschränkung der vorliegenden Offenbarung ausgelegt werden.

Der Einfachheit halber umfassen begrifflich im Folgenden Komponenten: Spannschienen, Steuerketten, Nockenwellenantriebsräder und Kurbelwellenräder. Der Begriff "Räder" umfasst, Nockenwellenantriebsräder und Kurbelwellenräder, ein Antriebsrad einer Wasserpumpe, ein Antriebsrad eine Vakuumpumpe etc.

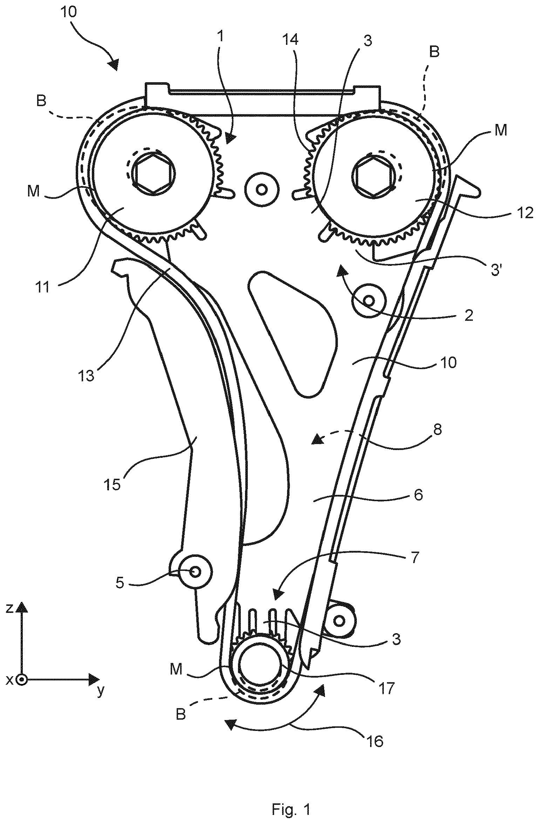

Figur 1 zeigt einen Montageträger 10 für einen zum Antreiben von zwei obenliegenden Nockenwellen 31 und 32 eines Verbrennungsmotors 20. An dem Montageträger 10 sind Räder, nämlich ein erstes Nockenwellenantriebsrad 11 und ein zweites Nockenwellenantriebsrad 12 angeordnet. In dem dargestellten Ausführungsbeispiel weisen die Nockenwellenantriebsräder 11 und 12 eine Außenverzahnung 14 auf, die sich in Eingriff mit einer vorgespannten umlaufenden Steuerkette 13 befinden. Es sind jedoch auch alternative, an einem Montageträger 10 montierbare Nockenwellenantriebe denkbar. Beispiele für alternative Nockenwellenantriebe sind Zahnriemenantriebe oder Außenverzahnungsgetriebe, die miteinander in direktem Eingriff stehende Zahnräder aufweisen. Weiterhin kann nicht nur der für den Antrieb der Nockenwellenantriebsräder 11 und 12 vorgesehene Antrieb einen erfindungsgemäßen Montageträger 10 aufweisen.

Außenverzahnungen oder Zahnriemen, die an einem Montageträger 10 vormontiert sind, beispielsweise Antriebe für eine Ölpumpe können ebenfalls an dem offenbarungsgemäßen Montageträger 10 montiert sein. Weiterhin kann auch ein nicht dargestelltes Phasenverstellungsmodul in die Nockenwellenantriebsräder 11 und 12 integriert sein.

Der Montageträger 10 dient zum verliersicheren Transportieren und zum Einführen für bewegliche Komponenten. In einer betriebsbereiten Position sind die Komponenten des Verbrennungsmotors rotierbar gegenüber dem Verbrennungsmotor gelagert. Bei den Komponenten handelt es sich in dem Ausführungsbeispiel um Nockenwellenantriebsräder 11 und 12, sowie eine Steuerkette 13 und eine Spannschiene 15. Die Spannschiene 15 wird in nicht dargestellter Weise um die Z-Achse im Uhrzeigersinn vorgespannt, um die Steuerkette 13 unter einer in Umfangsrichtung 16 wirkenden Vorspannung zu halten. Eines der Räder ist ein Kurbelwellenrad 17, welches drehmomentübertragend mit einer nicht dargestellten Kurbelwelle verbunden wird, um den Zahnriemen in der Umfangsrichtung 16 anzutreiben und dadurch eine Drehung mit halber Motordrehzahl auf die Nockenwellenantriebsräder 11 und 12 zu übertragen.

Die Komponenten, also die Nockenwellenantriebsräder 11 und 12, die Steuerkette 13 und das Kurbelwellenrad 17 werden außerhalb des Verbrennungsmotors zumindest durch Halteabschnitte 1, 2 und 7 an dem Montageträger 10 in einer Montageposition M gehalten. In der Montageposition M sind die Komponenten 11, 12, 15, 17 korrespondierend zu den Komponentenaufnahmen 21, 22, 25, 27 am Verbrennungsmotor 20 ausgerichtet. Die exakte Ausrichtung der Komponenten 11, 12, 25, 27 relativ zu den Komponentenaufnahmen 21, 22, 25, 27 erfolgt bei der Befestigung der Komponenten 11, 12, 15, 17 an den Komponentenaufnahmen 21, 22, 25, 27. In der exakten Ausrichtung befinden sich die Komponenten 11, 12, 25, 27 jeweils in einer betriebsbereiten Position B. Die betriebsbereite Position B ist gestrichelt dargestellt leicht außerhalb der Montageposition P. Der Zahnriemen 13 hat aufgrund der durch die Spannschiene 15 herrschenden Vorspannung Spiel nach Außen, um die Bewegung der Komponenten 11, 12, 15 und 27 von der Montageposition M in die betriebsbereite Position B zu ermöglichen.

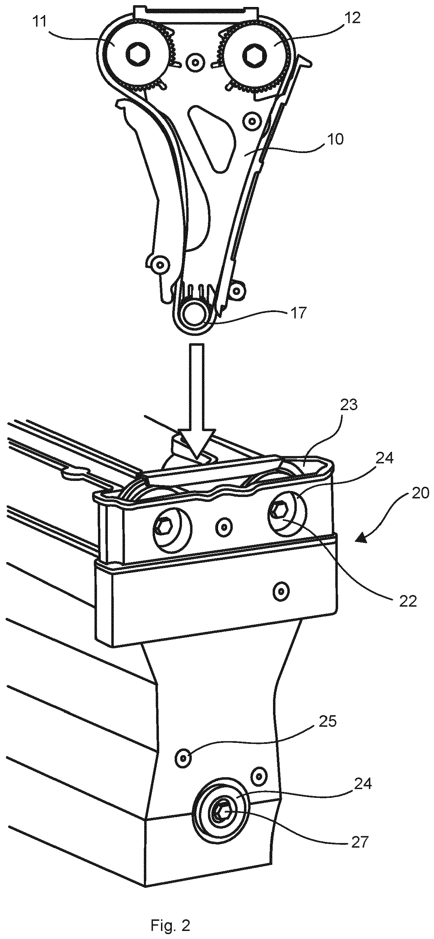

Zumindest eine Lage der Komponentenaufnahmen 21, 22, 25, 27 ist in Figur 2 dargestellt. Die Komponenten können außerhalb des Verbrennungsmotors an dem Montageträger 10 vormontiert in eine entsprechende Aufnahme 23 eingeführt werden und direkt mit den Komponentenaufnahmen 21, 22, 25, 27 verbunden werden. An dem Verbrennungsmotor 20 sind dementsprechend Montagezugänge 24 angeordnet. Die Aufnahme 23 ist auch in X-Richtung betrachtet so schmal, dass eine Entfernung des Montageträgers 10 nicht mehr möglich ist, weil die Nockenwellenantriebsräder 11 und 12 nicht überwunden werden können.

Eine erste Komponentenaufnahme 21 ist drehmomentübertragend mit einer linken Nockenwelle 31 verbunden. Die erste Komponentenaufnahme 21 weist nicht dargestellte Mittel auf, welche eine drehmomentübertragende Befestigung des Nockenwellenantriebsrads 11 mit der Komponentenaufnahme 21 ermöglichen.

Analog hierzu ist eine zweite Komponentenaufnahme 22 drehmomentübertragend mit einer rechten Nockenwelle 32 verbunden. Die zweite Komponentenaufnahme 22 weist nicht dargestellte Mittel auf, welche eine drehmomentübertragende Befestigung des Nockenwellenantriebsrads 11 mit der Komponentenaufnahme 22 ermöglichen.

Analog hierzu ist eine dritte Komponentenaufnahme 27 drehmomentübertragend mit einer nicht dargestellten Kurbelwelle verbunden. Die dritte Komponentenaufnahme 27 weist nicht dargestellte Mittel auf, welche eine drehmomentübertragende Befestigung des Nockenwellenantriebsrads 11 mit der dritten Komponentenaufnahme 27 ermöglichen.

Ferner kann vorgesehen sein, dass die Spannschiene 15 eine Achse 5 aufweist, die am Verbrennungsmotor in einer entsprechenden Komponentenaufnahme 25 fixierbar ist.

Bei der Montage der Komponenten 11, 12, 15, 17 an dem Verbrennungsmotor 21 in der oben beschriebenen Weise werden die Komponenten 11, 12, 15, 17 von der Montageposition M in eine betriebsbereite Position B gebracht.

Die Komponenten 11, 12, 15 und 27 werden bei der Montage in eine betriebsbereite Position 2 gebracht, in der die Komponenten 11, 12, 15 und 27 die Halteabschnitte 1, 2 und 7 nicht mehr berühren und zumindest relativ zu dem Verbrennungsmotor an den Komponentenaufnahmen 21, 22, 25, 27 translatorisch oder rotatorisch gelagert sind.

Mit der betriebsbereiten Position B ist eine Position der Räder gemeint, in der sie im Betrieb des Verbrennungsmotors 20 ihre jeweilige Funktion erfüllen. In der betriebsbereiten Position B erfüllen die beweglichen Komponenten 11, 12, 15 und 27 eine Funktion, nämlich die Übertragung einer Bewegung auf ein anderes Bauteil.

Es wird somit eine Fixierung der beweglichen Komponenten 11, 12, 15 und 27 durch spätere funktionelle Bauteile realisiert, nämlich durch die Steuerkette 13.

In dem dargestellten Ausführungsbeispiel ist der Montageträger 10 aus einem flächigen Blech mit einer Stirnseite 6 und einer Rückseite 8 gebildet, wobei die Halteabschnitte 1, 2 und 7 aus zur Stirnseite 6 und zur Rückseite 8 umgebogenen Laschen 3 gebildet sind. Die Laschen 3 sind voneinander beabstandet, jeweils eine mittlere Lasche 3 erstreckt sich in X- Richtung über die Stirnseite 6 und jeweils äußere Laschen 3' erstrecken sich entgegen der X-Richtung zur Rückseite 8. Die Laschen 3, 3' bilden zwischen sich eine Kontur aus, welche einer Außenkontur der Räder 11, 12, 17 entspricht.

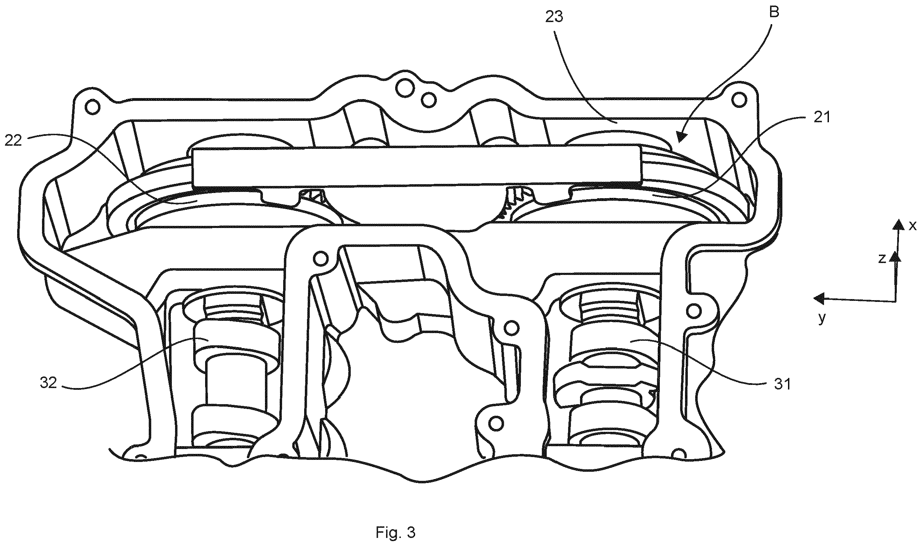

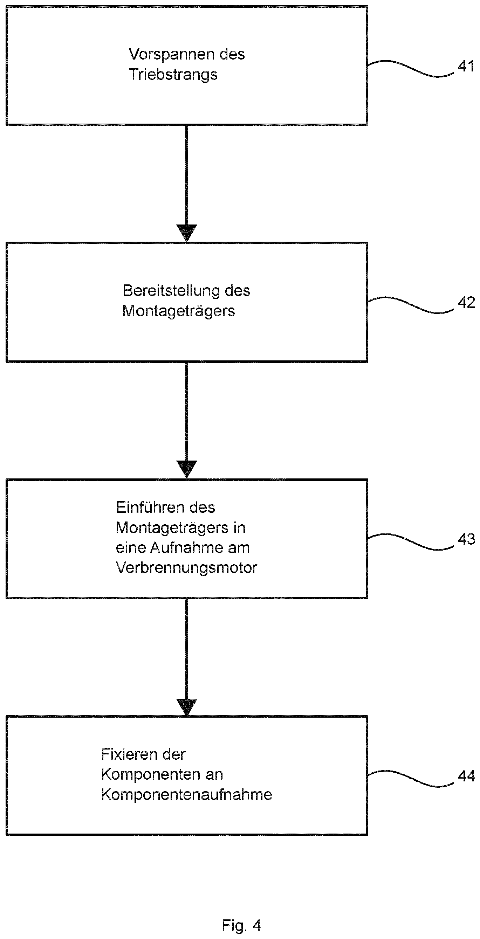

Figur 4 zeigt ein Verfahren zum Montieren von gegenüber einem Verbrennungsmotor 20 beweglich angeordneten Komponenten 11, 12, 13, 15 17 mit einem Montageträger 10 in vier Schritten. Es wird auf die Figuren 1 bis 3 Bezug genommen.

In Schritt 41 wird der Triebstrang (die Steuerkette 13) in Umfangsrichtung 16 vorgespannt, so dass die Räder 11, 12, 17 gegen ein Verlieren nach Außen gehalten werden. In X-Richtung werden die Räder 11, 12, 17 durch Halteabschnitte 1, 2, 7 in Position gehalten. Die Position außerhalb des Verbrennungsmotors 20 ist die Montageposition M.

In einem Schritt 42 wird der vormontierte Montageträger 10 für die Einführung in eine Aufnahme 23 am Verbrennungsmotor 20 bereitgestellt. Die Komponenten 11, 12, 15 17 sind in der Montageposition M gegenüber jeweils korrespondierenden Komponentenaufnahmen 21, 22, 25, 27 am Verbrennungsmotor 20 grob positioniert. Ein Monteur oder ein Roboter kann den Montageträger 10 vor der Einführung in Schritt 43 kontrollieren, um einen Winkelversatz oder einen Versatz in X-Richtung der Räder 11, 12 und 17 korrigieren zu können.

In Schritt 43 erfolgt das Einführen der Montageplatte 10 in eine entsprechende Aufnahme am Verbrennungsmotor 20. In Schritt 44 erfolgt das Fixieren der Komponenten 11, 12, 15 und 17 an den Komponentenaufnahmen 21, 22, 25, 27, wobei während des Fixierens die Komponenten 11, 12, 15, 17 zumindest so weit von den Halteabschnitten 3, 3` entfernt werden, dass sie translatorisch oder rotatorisch beweglich sind, wobei der Montageträger 10 nach Schritt 44 im Verbrennungsmotor 20 verbleibt.

### Bezugszeichenliste:

- 1: Halteabschnitt
- 2: Halteabschnitt
- 3: Lasche
- 3': Lasche
- 5: Achse
- 6: Stirnseite
- 7: Halteabschnitt
- 8: Rückseite
- 10: Montageträger
- 11: Nockenwellenantriebsrad
- 12: Nockenwellenantriebsrad
- 13: Steuerkette
- 14: Außenverzahnung
- 15: Spannschiene
- 16: Umfangsrichtung
- 17: Kurbelwellenrad
- 20: Verbrennungsmotor
- 21: Komponentenaufnahmen
- 22: Komponentenaufnahmen
- 23: Aufnahme
- 25: Komponentenaufnahmen
- 27: Komponentenaufnahmen
- 31: Nockenwelle
- 32: Nockenwelle
- B: betriebsbereite Position
- M: Montageposition

## Patentansprüche

1. Montageträger (10) für bewegliche Komponenten (11, 12, 17), wobei die Komponenten (11, 12, 17) außerhalb eines Verbrennungsmotors (20) zumindest durch Halteabschnitte (1, 2, 7) an dem Montageträger (10) in einer Montageposition (M) gehalten werden, in der die Komponenten (11, 12, 17) korrespondierend zu Komponentenaufnahmen (21, 22, 23) am Verbrennungsmotor (20) ausgerichtet sind, wobei die Komponenten (11, 12, 17) in eine betriebsbereite Position (B) bringbar sind, in der die Komponenten (11, 12, 17) die Halteabschnitte (1, 2, 7) nicht mehr berühren und zumindest relativ zu dem Verbrennungsmotor (20) an den Komponentenaufnahmen (21, 22, 27) translatorisch oder rotatorisch gelagert sind und der Montageträger (10) aus einem flächigen Blech mit einer Stirnseite (6) und einer Rückseite (8) gebildet ist,
**dadurch gekennzeichnet, dass**
die Halteabschnitte (1, 2, 7) aus zur Stirnseite (6) und zur Rückseite (8) umgebogenen Laschen (3, 3') gebildet sind.

2. Montageträger (10) nach Anspruch 1, wobei einige der Komponenten Räder (11, 12, 17) sind, an denen ein umlaufender, geschlossener Triebstrang anliegt, und wobei die Räder (11, 12, 17) in der Montageposition (M) zwischen den Halteabschnitten (1, 2, 7) und dem Triebstrang (13) gehalten sind.

3. Montageträger (10) nach Anspruch 2, wobei der Triebstrang eine Steuerkette (13) eines Nockenwellenantriebs ist und wobei die Räder eine Außenverzahnung (14) aufweisen, welche mit der Steuerkette (13) in Eingriff bringbar sind, und wobei die Steuerkette (13) durch eine Spannschiene (15) in Umfangsrichtung (16) auf einer Zugspannung gehalten werden, so dass die Räder (11, 12, 17) in einer radialen Richtung einwärts gegen die Halteabschnitte (1, 2, 7) gedrückt werden.

4. Montageträger (10) nach einem der Ansprüche 1 bis 3, wobei die Laschen (10) versetzt zueinander angeordnet sind und eine Innenkontur definieren, welche an eine Außenkontur der Räder (11, 12, 17) angepasst ist, so dass die Räder (11, 12, 17) gegen ein Kippen zu der Stirnseite (6) oder Rückseite (8) gesichert sind.

5. Montageträger (10) nach einem der Ansprüche 1 bis 3, wobei die Komponenten (11, 12, 17) rotierbar lagerbare Komponenten (11, 12, 17) eines Verbrennungsmotors (20) sind.

6. Verfahren zum Montieren von gegenüber einem Verbrennungsmotor (20) beweglich angeordneten Komponenten (11, 12, 13, 15, 17) mit den Schritten: Bereitstellen eines Montageträgers (20) mit daran angeordneten Halteabschnitten (1, 2, 7), welche die Komponenten (11, 12, 17) in einer Montageposition (M) halten, wobei die Komponenten in der Montageposition (M) gegenüber jeweils korrespondierenden Komponentenaufnahmen (21, 22, 27) ausgerichtet sind, wobei der Montageträger (10) aus einem flächigen Blech mit einer Stirnseite (6) und einer Rückseite (8) gebildet ist,
**dadurch gekennzeichnet, dass**
die Halteabschnitte (1, 2, 7) aus zur Stirnseite (6) und zur Rückseite (8) umgebogenen Laschen (3, 3') gebildet sind und den weiteren Schritten Einführen der Montageplatte (10) in eine entsprechende Aufnahme (23) am Verbrennungsmotor (20), Fixieren der Komponenten (11, 12, 15, 17) an den Komponentenaufnahmen (21, 22, 25, 27), wobei während des Fixierens die Komponenten (11, 12, 15, 17) zumindest so weit von den Laschen (1, 2, 7) entfernt werden, dass sie translatorisch oder rotatorisch beweglich sind, wobei der Montageträger (10) im Verbrennungsmotor (20) verbleibt.

7. Verfahren nach Anspruch 6, wobei die Komponenten Räder (11, 12, 17) sind, an denen ein umlaufender geschlossener Triebstrang anliegt, und wobei das Verfahren den folgenden Schritt (41) aufweist: Vorspannen des Triebstrangs in Umfangsrichtung (16), so dass die Räder (11, 12, 17) gegen ein Verlieren nach Außen gehalten werden.

8. Verfahren nach Anspruch 6 oder 7, wobei der Montageträger ein Montageträger (10) nach einem der Ansprüche 1 bis 5 ausgestaltet ist.

9. Verwendung eines Montageträgers (10) nach einem der Ansprüche 1 bis 5 in einem Verfahren nach den Ansprüchen 6 bis 8.

## Claims

1. Mounting support (10) for movable components (11, 12, 17), the components (11, 12, 17) being held in a mounting position outside of an internal combustion engine (20) at least by holding sections (1, 2, 7) on the mounting support (10). (M) are held, in which the components (11, 12, 17) are aligned corresponding to component receptacles (21, 22, 23) on the internal combustion engine (20), the components (11, 12, 17) being in an operational position ( B) can be brought in which the components (11, 12, 17) no longer touch the holding sections (1, 2, 7) and at least translationally relative to the internal combustion engine (20) on the component receptacles (21, 22, 27). or are rotatably mounted and the mounting support (10) is formed from a flat sheet metal with a front side (6) and a back side (8),
**characterized in that**
the holding sections (1, 2, 7) are formed from tabs (3, 3') bent towards the front side (6) and the back (8).

2. Mounting support (10) according to claim 1, wherein some of the components are wheels (11, 12, 17) on which a rotating, closed drive train rests, and wherein the wheels (11, 12, 17) in the mounting position (M) between the Holding sections (1, 2, 7) and the drive train (13) are held.

3. Mounting support (10) according to claim 2, wherein the drive train is a timing chain (13) of a camshaft drive and wherein the wheels have a toothing (14) which can be brought into engagement with the timing chain (13), and wherein the timing chain (13 ) is subjected to tension by a tension rail (15) in the circumferential direction (16) will be held so that the wheels (11, 12, 17) are pressed in a radial direction inwards against the holding sections (1, 2, 7).

4. Mounting support (10) according to one of claims 1 to 3, wherein the tabs (10) are arranged offset from one another and define an inner contour which is adapted to a hinge contour of the wheels (11, 12, 17), so that the wheels (11, 12, 17) are secured against tipping towards the front (6) or back (8).

5. Mounting support (10) according to one of claims 1 to 3, wherein the components (11, 12, 17) are rotatably storable components (11, 12, 17) of an internal combustion engine (20).

6. Method for assembling components (11, 12, 13, 15, 17) which are movably arranged relative to an internal combustion engine (20), comprising the steps: providing a mounting support (20) with holding sections (1, 2, 7) arranged thereon, which hold the components ( 11, 12, 17) in a mounting position (M), the components in the mounting position (M) being aligned relative to corresponding component holders (21, 22, 27), the mounting support (10) being made of a flat sheet metal with an end face (6) and a back (8), **characterized in that** the holding sections (1, 2, 7) are formed from tabs (3, 3') bent towards the front side (6) and the back (8) and the further steps of inserting the mounting plate (10) into a corresponding receptacle (23) on the internal combustion engine (20), fixing the components (11, 12, 15, 17) on the component holders (21, 22, 25, 27), the components (11, 12, 15, 17) being at least like this during fixing far from the tabs (1, 2, 7) so that they can be moved translationally or rotationally, with the assembly carrier (10) remaining in the internal combustion engine (20).

7. Method according to claim 6, wherein the components are wheels (11, 12, 17) on which a rotating, closed drive train is applied, and wherein the method comprises the following step (41): prestressing the drive train in the circumferential direction (16) so that the Wheels (11, 12, 17) must be held against losing after opening.

8. Method according to claim 6 or 7, wherein the mounting support is designed as a mounting support (10) according to one of claims 1 to 5.

9. Use of a mounting support (10) according to one of claims 1 to 5 in a method according to claims 6 to 8.

## Revendications

1. Support de montage (10) pour composants mobiles (11, 12, 17), les composants (11, 12, 17) étant maintenus dans une position de montage à l'extérieur d'un moteur à combustion interne (20) au moins par des sections de maintien (1, 2, 7) sont maintenus sur le support de montage (10) des éléments (M) dans lesquels sont alignés les composants (11, 12, 17) correspondant aux logements de composants (21, 22, 23) du moteur à combustion interne (20), les composants (11, 12, 17) étant dans une position de fonctionnement (B) peuvent être amenés dans laquelle les composants (11, 12, 17) ne touchent plus les sections de maintien (1, 2, 7) et au moins en translation par rapport aux moteur à combustion interne (20) sur les logements de composants (21, 22, 27) ou sont montés rotatifs et le support de montage (10) est formé d'une tôle plate avec un côté avant (6) et un côté arrière (8),
**caractérisé en ce que**
les sections de maintien (1, 2, 7) sont formées de pattes (3, 3') repliées vers le côté avant (6) et vers l'arrière (8).

2. Support de montage (10) selon la revendication 1, dans lequel certains des composants sont des roues (11, 12, 17) sur lesquelles repose un groupe motopropulseur fermé et rotatif, et dans lequel les roues (11, 12, 17) en position de montage (M) entre les sections de maintien (1, 2, 7) et la transmission (13).

3. Support de montage (10) selon la revendication 2, dans lequel la transmission est une chaîne de distribution (13) d'un entraînement par arbre à cames et dans lequel les roues présentent une denture (14) pouvant être amenée en prise avec la chaîne de distribution (13), et dans lequel la chaîne de distribution (13) est soumise à une tension par un rail de tension (15) dans la direction circonférentielle (16) sera maintenu de telle sorte que les roues (11, 12, 17) soient pressées dans une direction radiale vers l'intérieur contre les sections de maintien (1, 2, 7).

4. Support de montage (10) selon l'une des revendications 1 à 3, dans lequel les pattes (10) sont disposées décalées les unes par rapport aux autres et définissent un contour intérieur adapté à un contour de charnière des roues (11, 12, 17), de sorte que les roues (11, 12, 17) sont sécurisées contre le basculement vers l'avant (6) ou vers l'arrière (8).

5. Support de montage (10) selon l'une des revendications 1 à 3, dans lequel les composants (11, 12, 17) sont des composants stockables en rotation (11, 12, 17) d'un moteur à combustion interne (20).

6. Procédé d'assemblage de composants (11, 12, 13, 15, 17) disposés de manière mobile par rapport à un moteur à combustion interne (20), comprenant les étapes consistant à : fournir un support de montage (20) avec des sections de maintien (1, 2, 7) disposés dessus, qui maintiennent les composants (11, 12, 17) dans une position de montage (M), les composants dans la position de montage (M) étant alignés par rapport aux supports de composants correspondants (21, 22, 27), le support de montage ( 10) étant constitué d'une tôle plate avec une face frontale (6) et un dos (8), **caractérisé en ce que** les sections de maintien (1, 2, 7) sont formées de languettes (3, 3') courbées vers le côté avant (6) et vers l'arrière (8) et les étapes supplémentaires consistant à insérer la plaque de montage (10) dans un réceptacle correspondant (23) sur le moteur à combustion interne (20), fixant les composants (11, 12, 15, 17) sur les porte-composants (21, 22, 25, 27), les composants (11, 12, 15, 17) étant ainsi au moins lors d'une fixation éloignée des pattes (1, 2, 7) pour qu'elles puissent être déplacées en translation ou en rotation, le porte-ensemble (10) restant dans le moteur à combustion interne (20).

7. Procédé selon la revendication 6, dans lequel les composants sont des roues (11, 12, 17) sur lesquelles est appliquée une chaîne cinématique fermée et rotative, et dans lequel le procédé comprend l'étape (41) suivante : précontraindre la chaîne cinématique dans la direction circonférentielle (16) de sorte que les roues (11, 12, 17) doivent être maintenues contre la perte après ouverture.

8. Procédé selon la revendication 6 ou 7, dans lequel le support de montage est conçu comme un support de montage (10) selon l'une des revendications 1 à 5.

9. Utilisation d'un support de montage (10) selon l'une des revendications 1 à 5 dans un procédé selon les revendications 6 à 8.
